# EUROPEAN PATENT SPECIFICATION

(11) **EP 2 960 098 B1**
(45) Date of publication and mention of the grant of the patent: **04.11.2020**
(21) Application number: 14174784.0
(22) Date of filing: 27.06.2014
(51) Int. Cl.: H04W 4/48

(54) **Methods, device and system for assisting a vehicle occupant utilizing functionality of a nomadic device via an in-vehicle system**
Verfahren, Vorrichtung und System zur Unterstützung eines Fahrzeuginsassen unter Verwendung der Funktionalität einer nomadischen Vorrichtung über ein fahrzeuginternes System
Procédés, dispositif et système pour aider un occupant de véhicule utilisant la fonctionnalité d'un dispositif nomade par l'intermédiaire d'un système embarqué

(43) Date of publication of application: 30.12.2015
(73) Proprietor: Volvo Car Corporation, 40531 Göteborg (SE)
(72) Inventor: Tiedje, Stefan, 44350 Lerum (SE)
(74) Representative: Valea AB

(56) References cited:
- US-A1- 2014 129 092

## Description

### TECHNICAL FIELD

The present disclosure relates to assisting a vehicle occupant utilizing functionality of a nomadic device via an in-vehicle system, in avoiding incorrectly assuming the in-vehicle system to be at fault rather than the nomadic device.

### BACKGROUND

The use of infotainment systems in vehicles and functionality development related thereto have increased rapidly in the last few years. An infotainment system is commonly known to refer to hardware/software products and systems which are built into, or can be added to vehicles, in order to enhance the vehicle occupant experience when it comes to providing audio and visual entertainment, as well as automotive navigation systems. This includes for instance playing media such as media files, CDs, DVDs, and TV, as well as the incorporation of video game consoles into the vehicle. Infotainment systems of today are known to comprise one or several e.g. touch sensitive displays, also referred to as a touch screen, well known in the art. The touch sensitive displays are commonly utilized to display e.g. graphic, video, digital images, animations and text, and further utilized to display e.g. virtual buttons, menus, and other user-interface objects to thereby provide a user interface through which a vehicle occupant may interact with the infotainment system.

On the other end, the use of handheld devices such as smart phones has increased rapidly in the last few years. Smart phones, for instance, may download various application programs ("applications", "apps") that operate on the phone. A user can utilize a user-interface of the phone to control the application and/or utilize the application in some way, such as watching the visual display or listening to the audio output.

Not surprisingly, extending applications from a handheld device to the vehicle has become a popular feature offered by various service providers and vehicle manufacturers.

A handheld device connected to a vehicle is commonly referred to as a nomadic device, and includes all types of information and communication as well as entertainment devices that can be brought into the vehicle by the driver to be used while driving. Commonly, some of the applications, such as e.g. watching TV or a film, become unavailable should the vehicle speed exceed e.g. 4-8 km/h.

US 2014/129092, for instance, is set out to provide various information to a vehicle occupant from a display device, while reducing disadvantages relating to vehicle traveling safety such as directing the driver's attention to a display screen. A simplified phone information screen may be utilized in contrast to a detailed phone information screen.

Current examples of nomadic devices include mobile phones, portable computers, Pocket PCs, PDAs, mobile navigation devices, iPods, DVD Players and multi-functional smart phones. Examples of extending applications from a nomadic device to the vehicle include the connection of MP3 players, iPods being connected via USB connections, and mobile phones such as smart phones being connected via e.g. wireless connections. All of these provide methods to bring content to and from the vehicle and allow a vehicle occupant to have some connectivity with the vehicle. As a result, the vehicle occupant can take advantage of better user interface components offered by the infotainment system of the vehicle, for instance a larger screen and a higher quality audio output.

Notwithstanding the advantages of pairing a nomadic device with the vehicle, the vehicle occupant may from time to time experience problems during his or her use of the nomadic device via the infotainment system. For instance, streaming of data may be interrupted or become slow, or a phone call may be dropped. The vehicle occupant may in such a scenario assume the problem to be caused by the infotainment system, or the connection thereto, although the root cause for the arisen problem may lay elsewhere, for instance in the nomadic device itself, or in the connection of the nomadic device to e.g. a cellular network.

WO 2012/047602, for instance, relates to operating mobile applications in a vehicle. The vehicle includes a computer that comprises a human machine interface (HMI) for control by a user of mobile applications executing on an application server. However, although vehicle-based operation of the mobile applications via the HMI is enabled, such that the user may take advantage of the better user interface components offered by the infotainment system, WO 2012/047602 does not consider the aforementioned dilemma of the vehicle being unfairly blamed for problems arising while utilizing functionality of the nomadic device through the infotainment system, which problems are not necessarily related to the infotainment system, but rather related to the paired nomadic device.

### SUMMARY OF THE INVENTION

It is therefore an object of embodiments herein to provide an approach of assisting a vehicle occupant in judging the cause of a problem which may arise while utilizing functionality of a nomadic device via an in-vehicle system.

The first aspect of the present invention is defined by a method performed by a nomadic device paired with an in-vehicle system of a vehicle, according to the subject-matter of claim 1.

Thereby, a vehicle occupant utilizing the nomadic device via the in-vehicle system may be notified of a current status associated with the nomadic device, through the in-vehicle system, in a convenient manner.

Accordingly, there is provided a solution according to which the vehicle occupant is assisted in judging whether an experienced e.g. problem may be related to the nomadic device rather than the in-vehicle system, subsequently reducing unnecessary e.g. phone calls to a vehicle support center.

Furthermore, an approach is suggested according to which, by informing, or alerting, the vehicle occupant of the current status associated with the nomadic device, via the in-vehicle system, resources of the in-vehicle system, such as display, loudspeakers and/or tactile signal-producing devices, may be utilized for the task. Accordingly, the indicative information may be presented in a user-friendly and/or safe manner to the vehicle occupant.

For that reason, there is provided an approach of assisting a vehicle occupant in judging the cause of a problem which may arise while utilizing functionality of a nomadic device via an in-vehicle system.

The technical features and corresponding advantages of the above mentioned method will be discussed in further detail in the following.

By introducing a method performed by a nomadic device paired with an in-vehicle system of a vehicle, for assisting a vehicle occupant utilizing functionality of the nomadic device via the in-vehicle system, in avoiding incorrectly assuming the in-vehicle system to be at fault rather than the nomadic device, an approach is provided which enables for a vehicle occupant to avoid unfairly blaming the vehicle end should the connected nomadic device be in a dysfunctional state. That is, by enabling for a vehicle occupant to judge whether a problem that has arisen while utilizing functionality of the nomadic device through the in-vehicle system, is likely to be related to the nomadic device end rather than the vehicle end, misplaced annoyance towards the vehicle and/or the in-vehicle system may be avoided. Furthermore, unnecessary e.g. calls to vehicle support centers may be avoided in that the vehicle occupant is made aware that the nomadic device is likely to be at fault rather than the vehicle and/or in-vehicle system.

The referred to "vehicle" may be represented by any arbitrary vehicle, for instance an engine-propelled vehicle, such as e.g. a car, truck, lorry, van, bus, tractor, military vehicle, scooter, motorcycle, air plane, vessel such as e.g. a ship, and/or golf cart. Alternatively, the "vehicle" may refer to a rail-bound vehicle, such as e.g. a train or tram. The "vehicle occupant" is intended to be interpreted in a broad manner, and may refer to any arbitrary person or persons being positioned within the vehicle, such as a potential driver or passenger(s) of the vehicle, or a person being positioned in the vicinity thereof.

The referred to "in-vehicle system", which may also be referred to as a built-in vehicle system, native in-vehicle control system or vehicle infotainment system, may refer to hardware/software products and systems which are permanently or temporarily built into, or can be added to the vehicle, in order to enhance the vehicle occupant experience when it comes to providing audio and visual entertainment, as well as automotive navigation systems. Accordingly, the in-vehicle system may comprise resources adapted for functionality control of the in-vehicle system, such as one or several displays, microphones, speakers, input/control devices such as physical push buttons, rocker buttons, dials, slider switches, sticks, and/or a touchpad.

Furthermore, the referred to "nomadic device" is a commonly known term for a handheld device, e.g. portable electronic device, connected/connectable to the vehicle, and may include all types of information, communication as well as entertainment devices that can be brought into the vehicle by the vehicle occupant with the intention to be used e.g. while driving. Current examples comprise mobile phones, portable computers, Pocket PCs, PDAs, mobile navigation devices, iPods, DVD Players and/or multi-functional smart phones. Other examples may include a surf plate, such as an iPad.

The nomadic device being "paired" with the in-vehicle system refers to the nomadic device being connected to the vehicle. Such a connection may for instance be accomplished physically, such as via USB connection, and/or wirelessly, such as via Bluetooth, WiFi, or the like. Possibly, in order to be paired, identification of the nomadic device may be necessary, and/or authentication of the vehicle occupant.

While the nomadic device is paired, the vehicle occupant may utilize functionality of the nomadic device via the in-vehicle system. That is, the nomadic device may include various user application programs, e.g. either integrated into an operating system of the nomadic device, and/or stored in a memory thereof and executable by a processor thereof. Thus, user application programs may be hosted and run on the nomadic device while the vehicle occupant may interact with one or several of the user application programs through the in-vehicle system. Examples of user application programs include, for instance, applications available for the iPhone™ that are commercially available from Apple Computer, Cupertino, Calif., applications for phones running the Android™ operating system that is commercially available from Google, Inc., Mountain View, Calif., applications for BlackBerry devices, available from RIM, Ontario Canada, and/or applications available for Windows Mobile devices, available from Microsoft Corp., Redmond, Wash. Moreover, while the nomadic device is paired, the resources of the in-vehicle system may be utilized, such as e.g. microphones, speakers, displays and/or in-vehicle buttons for interacting with a selected user application program running on the nomadic device.

The expression "be at fault" is here intended to cover a scenario where the vehicle occupant experiences that e.g. a phone call or a user application running on the nomadic device, via the in-vehicle system, is not functioning properly. "Be at fault" may hence be interpreted in a broad manner, including an actual or perceived problem, fault, issue and/or misbehaviour experienced while utilizing the nomadic device via the in-vehicle system. For instance, a phone call may be dropped, or data traffic may be considered slow or even be interrupted. Insufficient 3G coverage may, for instance, result in interruptions in a song played from the nomadic device.

Since the nomadic device determines, by means of a status determining unit, status data reflecting a current status associated with the nomadic device, the nomadic device performs a status check, the result of which may indicate a potential problem, fault, issue and/or misbehaviour associated with the nomadic device. Accordingly, the nomadic device itself may assist in determining e.g. at least one status element, which subsequently may be of help in judging whether the experienced e.g. problem may be related to the nomadic device rather than the in-vehicle system.

The word "determining" may refer to learning of, reading, fetching, receiving and/or interpreting, and may take place periodically, substantially constantly or on request. The expression "status data" may refer to status related data, e.g. at least one status element. Furthermore, "reflecting" may refer to indicating, comprising and/or revealing, while "current" is intended to be interpreted in a broad manner, likewise including "essentially current". Moreover, the expression "associated with" may refer to "related to" or "connected to", and may hence refer to a potential e.g. problem of the nomadic device or, for instance, a radio connection to a radio communication network which the nomadic device is part of.

Accordingly, "determining status data reflecting a current status associated with the nomadic device" may hence refer to learning of, reading, fetching, receiving and/or interpreting at least one status element indicating, comprising and/or revealing an essentially current status related to or connected to the nomadic device itself or a radio communication connection thereof.

For instance, the status data may be associated with five commonly known behaviours of a service: "Availability" (how much of the time is the service up and running?), "Accessibility" (what is the likelihood that an attempt to use the service is successful?), "Retainability" (likelihood of successful completion), "Integrity" (how good is the service?), and "Utilization" (what is the service load?).

Since the nomadic device furthermore provides, by means of a providing unit, status information to the in-vehicle system, which status information is based on the status data, information derived from the result of the status check is submitted to the in-vehicle system. Thereby, the in-vehicle system is informed of the outcome of the determined status data, which subsequently may be of help in judging whether the experienced e.g. problem may be related to the nomadic device rather than the in-vehicle system.

The expression "providing the status information" may refer to transmitting, submitting and/or sending the status information, e.g. comprised in a message or signal of a generic or customized format supported in the communication between the nomadic device and the in-vehicle system. "Status information" may refer to the determined status data as is, or information comprising the status data or a portion thereof, or the status data adjusted to comply with e.g. the communication protocol between the nomadic device and the in-vehicle system, or adjusted to comply with a format supported by the in-vehicle system. Furthermore, "based on" is throughout this disclosure intended to be interpreted to likewise include at least utilizing, considering, taking into account and deriving from.

Since indicative information derived from the status information is adapted to be presented by the in-vehicle system, the in-vehicle system may present information reflecting the previously discussed current status associated with the nomadic device. Thereby, a vehicle occupant utilizing the nomadic device via the in-vehicle system may be notified of said current status associated with the nomadic device, through the in-vehicle system, in a convenient manner. Accordingly, the vehicle occupant is assisted in judging whether an experienced e.g. problem may be related to the nomadic device end rather than the vehicle end, subsequently reducing unnecessary e.g. phone calls to a vehicle support center. Furthermore, by informing, or alerting, the vehicle occupant of the current status associated with the nomadic device, via the in-vehicle system, resources of the in-vehicle system, such as display, loudspeakers and/or tactile signal-producing devices, may be utilized for the task. Accordingly, the indicative information may be presented in a user-friendly and/or safe manner to the vehicle occupant, for instance visually, audibly and/or in a haptic manner, such as via vibration. Consequently, there would be no need for the vehicle occupant to confront his or her nomadic device to learn of said current status, which has a potential to take the vehicle occupant's attention from driving.

The expression "indicative information derived from the status information" refers to the indicative information being based on the status information. The indicative information may hence be represented by the status information itself, or information comprising the status information or a portion thereof, or the status information adjusted to comply with the presentation means of the in-vehicle system. The "indicative information" may hence, for instance, refer to a visual output of one or a combination of e.g. letters, numbers, symbols, graphics, video, digital images, and/or animations, for instance visualized in a pop-up message. Additionally or alternatively, the indicative information may refer to an audible output, such as the indicative information being broadcasted as an acoustic message or signal.

For instance, the indicative information may be represented by a visual output, such as a symbol, displayed on a display of the in-vehicle system e.g. situated in the center stack, in front of the driver in the dashboard, or represented by a head-up display projected on the wind screen. The symbol, for instance in the form of a triangle, may furthermore, take on a different color, such as green, orange or red, depending on the content of the status information. Furthermore, should the vehicle occupant be interested in evaluating further content associated with the status information, further information related to the status information may be displayed on selection thereof, for instance in a scroll down list.

According to one embodiment, the status data may comprise a status indication, performance indication and/or an error indication associated with: the nomadic device itself, such as e.g. an indication of model (is the model supported by the in-vehicle system?), operating system version, device ID, SIM ID, SIM status, system uptime (if the nomadic device has been used for a long time), temperature, CPU load, capacity demanding applications, and/or battery status. Additionally or alternatively, the status data may comprise a status indication, performance indication and/or an error indication associated with: a radio communication connection between a radio communications network and the nomadic device, such as e.g. an indication of type of radio communications network and/or Quality of Service, for instance packet loss, jitter, streaming, signal strength, IP status, data connection and/or data activity (measuring bandwidth and activity). Additionally or alternatively, the status data may comprise a status indication, performance indication and/or an error indication associated with: an application, "app", running on the nomadic device, such as e.g. in indication of Quality of Service, for instance packet loss, jitter and/or streaming.

Thereby, one or several elements indicating status of the nomadic device, a radio communication connection of the nomadic device, and/or an application running on the nomadic device, are determined, which subsequently may be of help in judging whether an experienced e.g. problem may be related to the nomadic device rather than the in-vehicle system. The expression "radio communications network" may refer to for instance a cellular communications network, or any arbitrary communications network providing the nomadic device with online abilities. The radio communication network may accordingly be represented by e.g. commonly known communication standard networks LTE, EDGE, CDMA, 4G, 3G, GPRS, or GSM. Furthermore, the word "application" may refer to a previously discussed user application program hosted and run on the nomadic device.

According to another embodiment, the previously mentioned provision of the status information may comprise providing the status information via a dedicated application, "app", running on the nomadic device, and/or providing the status information via a standardized platform enabling direct access from the in-vehicle system to functionality, control and usage of the nomadic device. Thereby, feasible solutions are suggested by means of which the status information may be provided from the nomadic device to the in-vehicle system, in a convenient manner. The expression "dedicated application" is intended to refer to an application dedicated for said provision of the status information, and may for instance be represented by an adapted Volvo OnCall app or a specific application communicating with the in-vehicle system via e.g. Google Automotive Link (GAL). The expression "standardized platform", on the other hand, is intended to refer to a standard platform such as for instance Google Projection Mode (GPM), CarPlay or MirrorLink, or a successor thereof, supported by the nomadic device and the infotainment system.

According to still another embodiment, the nomadic device may further refine, by means of a nomadic refining unit comprised in the nomadic device, a raw content of the status information to a refined content, prior to the previously mentioned provision of the status information. Thereby, the status information may be adjusted from raw data to refined data, whereby processing, e.g. interpretation, of the status information to a great extent may be performed in the nomadic device in addition to, or rather than in, the in-vehicle system. Vice versa, should a raw content of the status information be refined to a refined content subsequent to the provision of the status information to the in-vehicle system, processing, e.g. interpretation, of the status information may to a great extent be performed in the in-vehicle system in addition to, or rather than in, the nomadic device. The word "refine" is intended to be interpreted in a broad manner, and may thus likewise include adapt, adjust, minimize and process. "Raw content" may refer to status information as such, e.g. the determined status data or a portion thereof. "Refined content", on the other hand, may hence refer to status information which, to some extent, has been refined.

According to yet another embodiment, the previously mentioned determining of the status data may be initiated by a problem associated with the nomadic device being detected. Additionally or alternatively, the determining may be initiated by conditions of a subscription of the in-vehicle system being fulfilled, which subscription defines the conditions for the determining. Additionally or alternatively, the determining may be initiated by receiving, by means of a nomadic receiving unit comprised in the nomadic device, a status request from the in-vehicle system, which status request comprises a request for determining a current status associated with the nomadic device. Thereby, a detected problem, fulfilled conditions of a subscription, and/or a request from the in-vehicle system, may initiate determining of the status data.

The word "problem" may refer to e.g. a phone call being dropped, or data traffic being considered slow or being interrupted. The referred to "subscription of the in-vehicle system" is intended to refer to conditions which when fulfilled, may initiate determining of the status data. Such a subscription may be provided e.g. once, or regularly, to the nomadic device, as suitable for the implementation at hand. Furthermore, the referred to "status request" submitted to the nomadic device from the in-vehicle system, may be comprised in a message or signal of a generic or customized format supported in the communication between the nomadic device and the in-vehicle system. The status request may for instance be submitted by the in-vehicle system, should it be the in-vehicle system that detects the previously discussed "problem".

The second aspect of the present invention is defined by a method performed by an in vehicle system paired with a nomadic device, according to the subject-matter of claim 6.

According to one embodiment, the status data may comprise a status indication, performance indication and/or an error indication associated with: the nomadic device itself, such as e.g. an indication of model (is the model supported by the in-vehicle system?), operating system version, device ID, SIM ID, SIM status, system uptime (if the nomadic device has been used for a long time), temperature, CPU load, capacity demanding applications, and/or battery status. Additionally or alternatively, the status data may comprise a status indication, performance indication and/or an error indication associated with: a radio communication connection between a radio communications network and the nomadic device, such as e.g. an indication of type of radio communications network and/or Quality of Service, for instance packet loss, jitter, streaming, signal strength, IP status, data connection and/or data activity (measuring bandwidth and activity). Additionally or alternatively, the status data may comprise a status indication, performance indication and/or an error indication associated with: an application, "app", running on the nomadic device, such as e.g. an indication of Quality of Service, for instance packet loss, jitter and/or streaming.

According to another embodiment, the previously mentioned receiving of the status information may comprise receiving the status information via a dedicated application, "app", running on the nomadic device, and/or receiving the status information via a standardized platform enabling direct access from the in-vehicle system to functionality, control and usage of the nomadic device.

According to still another embodiment, the in-vehicle system may further refine, by means of an in-vehicle refining unit comprised in the in-vehicle system, a raw content of the status information to a refined content, subsequent the previously mentioned receiving of the status information.

According to one embodiment, the in-vehicle system may further transmit, by means of a request unit comprised in the in-vehicle system, a status request to the nomadic device, wherein the status request comprises a request for determining a current status associated with the nomadic device. According to one example, the transmission may be initiated by a vehicle occupant. Additionally or alternatively, the in-vehicle system may further provide a subscription of the in-vehicle system to the nomadic device, which subscription defines conditions for the nomadic device to determine the status data reflecting a current status associated with the nomadic device.

According to a further embodiment, the previously mentioned transmitting of the status request may be initiated by a problem associated with the nomadic device being detected. According to yet another embodiment, the previously mentioned presenting the indicative information may comprise displaying the indicative information on a display of the in-vehicle system.

Similar advantages as those mentioned in the foregoing in relation to the first aspect correspondingly apply to the second aspect, why these advantages are not further discussed.

The third aspect of the present invention is defined by a nomadic device, according to the subject-matter of claim 12.

The fourth aspect of the present invention is defined by an in vehicle system, according to the subject-matter of claim 13.

According to a fifth aspect of embodiments herein, the object is achieved by a vehicle comprising such an in-vehicle system described in the foregoing. Yet again, similar advantages as those mentioned in the foregoing in relation to the first aspect correspondingly apply to the fifth aspect, why these advantages are not further discussed.

According to a sixth aspect of embodiments herein, the object is achieved by a computer program product, characterized in that it comprises a computer program containing computer program code means arranged to cause a processor to execute the steps of the previously mentioned methods of the nomadic device and/or the in-vehicle system stored on a computer-readable medium or carrier wave. Once more, similar advantages as those mentioned in the foregoing in relation to the first aspect correspondingly apply to the sixth aspect, why these advantages are not further discussed.

It should be appreciated that the introduced methods in the nomadic device and the in-vehicle system may require the nomadic device and/or the in-vehicle system to be in a respective "ON" state.

### BRIEF DESCRIPTION OF THE DRAWINGS

The various aspects of the non-limiting embodiments of the invention, including particular features and advantages, will be readily understood from the following detailed description and the accompanying drawings, in which:
**Figure 1** illustrates a schematic view of an exemplifying vehicle comprising an in-vehicle system, which in-vehicle system is adapted to be paired with a nomadic device, according to embodiments of the disclosure;
**Figure 2** is a schematic block diagram illustrating an in-vehicle system and a nomadic device, according to embodiments of the disclosure;
**Figure 3** is a flowchart depicting an exemplifying method performed by an in-vehicle system, which in-vehicle system is paired with a nomadic device, according to embodiments of the disclosure;
**Figure 4** is a flowchart depicting an exemplifying method performed by a nomadic device paired with an in-vehicle system, according to embodiments of the disclosure; and
**Figure 5** is a flowchart depicting an exemplifying method comprising intertwined actions performed by a nomadic device and in-vehicle system, according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to assisting a vehicle occupant utilizing functionality of a nomadic device via an in-vehicle system, in avoiding incorrectly assuming the in-vehicle system to be at fault rather than the nomadic device, there will be disclosed how a vehicle occupant utilizing the nomadic device via the in-vehicle system may be notified of a current status associated with the nomadic device, through the in-vehicle system, in a convenient manner.

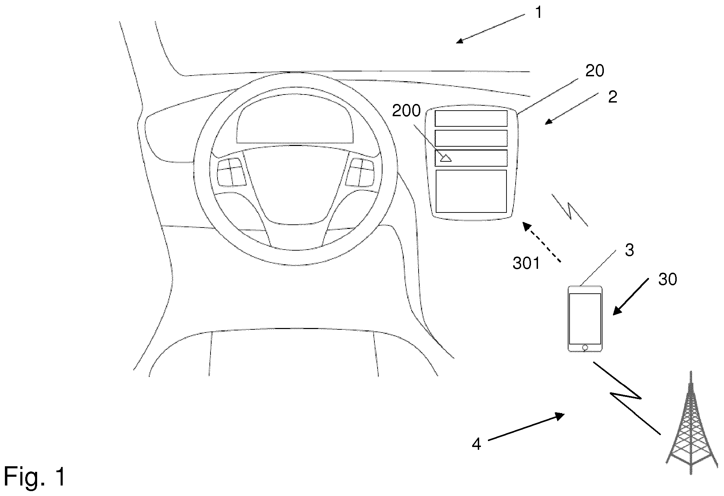

Referring now to the figures and **Figure 1** in particular, there is depicted a schematic view of an exemplifying **vehicle 1** comprising an **in-vehicle system 2**, which in-vehicle system 2 is adapted to be paired with a **nomadic device 3**, according to embodiments of the disclosure.

In the illustrated embodiment of Figure 1, although not restricted thereto, the depicted vehicle 1 is a car. The in-vehicle system 2 comprised in the vehicle 1, which in the shown example is represented by a vehicle infotainment system, comprises a **display 20**, here positioned in the center stack. The display 20 is here adapted to display **indicative information 200**, which indicative information 200 will be further described below. The indicative information 200 is here represented by an exemplifying and non-limiting triangular symbol, which for instance may be shown in different colors, such as green, orange and red. The indicative information 200 is derived from **status information 301** based on status data **30** reflecting a current status associated with the nomadic device 3.

The in-vehicle system 2 is adapted to be paired, i.e. connected e.g. wirelessly, with the nomadic device 3. The nomadic device 3 is in the illustrated embodiment represented by a smart phone, such as an Android. The nomadic device 3 may be adapted to be in radio communication connection with a **radio communications network 4.**

The nomadic device 3 may at a given instant be characterized by its model, operating system version, device ID, SIM ID, SIM status, system uptime, temperature, CPU load, capacity demanding applications, and/or battery status. Furthermore, the nomadic device 3 may at a given instant be characterized by an application, "app", running on the device 3. In a similar manner, the radio communication connection between the radio communications network 4 and the nomadic device 3 may at a given instant be characterized by type of radio communications network 4 and/or Quality of Service, for instance packet loss, jitter, streaming, signal strength, IP status, data connection and/or data activity.

The nomadic device 3 may further be adapted to be informed of conditions of a subscription of the in-vehicle system 2, which subscription defines the conditions for determining a current status of the nomadic device 3, as will be described further below. Furthermore, the nomadic device 3 may be adapted to keep track of fulfillment of said conditions.

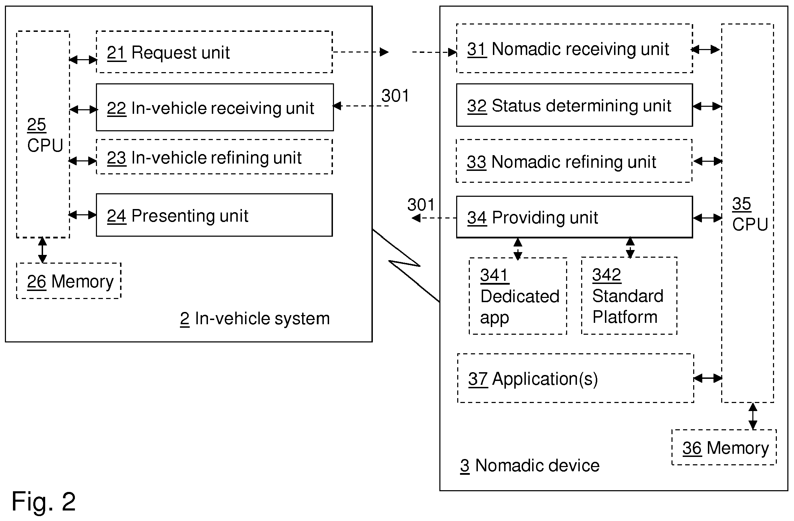

As further shown in **Figure 2**, which is a schematic block diagram illustrating the in-vehicle system 2 and the nomadic device 3, according to embodiments of the disclosure, the nomadic device 3 is adapted to be paired with the in-vehicle system 2 of the vehicle 1, for assisting the vehicle occupant utilizing functionality of the nomadic device 3 via the in-vehicle system 2, in avoiding incorrectly assuming the in-vehicle system 2 to be at fault rather than the nomadic device 3. Correspondingly, the in-vehicle system 2 is adapted to be paired with the nomadic device 3, for assisting a vehicle occupant utilizing functionality of the nomadic device 3 via the in-vehicle system 2, in avoiding incorrectly assuming the in-vehicle system 2 to be at fault rather than the nomadic device 3.

The in-vehicle system 2 comprises an **in-vehicle receiving unit 22** adapted for receiving status information 301 from the nomadic device 3, as will be further described below. The in-vehicle system 2 furthermore comprises a **presenting unit 24** adapted for presenting indicative information 200, as also will be further described below.

The in-vehicle system 2 may further optionally comprise a **request unit 21** adapted for transmitting a status request to the nomadic device 3. Additionally or alternatively, the in-vehicle system 2 may comprise an **in-vehicle refining unit 23** adapted for refining a raw content of the status information 301 to a refined content.

Furthermore, the embodiments herein performed by the in-vehicle system 2, which in-vehicle system 2 is adapted to be paired with the nomadic device 3, for assisting the vehicle occupant utilizing functionality of the nomadic device 3 via the in-vehicle system 2, in avoiding incorrectly assuming the in-vehicle system 2 to be at fault rather than the nomadic device 3, may be implemented through one or more processors, such as a **processor 25**, here denoted CPU, together with computer program code for performing the functions and actions of the embodiments herein. Said program code may also be provided as a computer program product, for instance in the form of a data carrier carrying computer program code for performing the embodiments herein when being loaded into the in-vehicle system 2. One such carrier may be in the form of a CD ROM disc. It is however feasible with other data carriers such as a memory stick. The computer program code may furthermore be provided as pure program code on a server and downloaded to the in-vehicle system 2.

The nomadic device 3 may further comprise a **memory 26** comprising one or more memory units. The memory 26 may be arranged to be used to store e.g. information, and further to store data, configurations, schedulings, fault data and applications, to perform the methods herein when being executed in the in-vehicle system 2. The in-vehicle receiving unit 22, the presenting unit 24, the optional request unit 21, the optional in-vehicle refining unit 23 described above, which will be described in more detail later on in this description, and/or the optional processor 25 and the optional memory 26, may for instance be implemented in one or several arbitrary nodes, arranged locally on-board the vehicle, remotely, or a combination thereof. Such a node may be an electronic control unit (ECU) or any suitable generic electronic device, and may involve one or a combination of for instance an infotainment node or a main central node. Those skilled in the art will also appreciate that the in-vehicle receiving unit 22, the presenting unit 24, the optional request unit 21 and/or the optional in-vehicle refining unit 23 described above, and which will be described in more detail later on in this description, may refer to a combination of analog and digital circuits, and/or one or more processors configured with software and/or firmware, e.g. stored in a memory such as the memory 26, that when executed by the one or more processors such as the processor 25 perform as will be described in more detail below. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

Correspondingly, the nomadic device 3 comprises a **status determining unit 32** adapted for reflecting a current status associated with the nomadic device 3, as will be further described below. The nomadic device 3 furthermore comprises a **providing unit 34** adapted for providing status information 301 to the in-vehicle system 2, which will also be further described below.

Furthermore, the nomadic device 3 may comprise a **dedicated application 341**, "app", such as e.g. a configured Volvo OnCall app, adapted to provide the status information 301 to the in-vehicle system 2. Additionally or alternatively, the nomadic device 3 may comprise a **standardized platform 342**, such as e.g. "Google Projection Mode" ("GPM"), "Carplay", or "MirrorLink" or a successor thereof, adapted to provide the status information 301 to the in-vehicle system 2, which standardized platform 342 is adapted to enable direct access from the in-vehicle system 2, to functionality, control and usage of the nomadic device 3.

Moreover, the nomadic device 3 may be adapted have any number of **applications 37**, "apps", running on the nomadic device 3.

The nomadic device 3 may additionally comprise a **nomadic receiving unit 31** adapted to receive a status request from the in-vehicle system 2, as will be described further below. Additionally or alternatively, the nomadic device 3 may comprise a **nomadic refining unit 33** adapted for refining a raw content of the status information 301 to a refined content, which will also be described further below.

Furthermore, the embodiments herein performed by the nomadic device 3 adapted to be paired with the in-vehicle system 2, for assisting the vehicle occupant utilizing functionality of the nomadic device 3 via the in-vehicle system 2, in avoiding incorrectly assuming the in-vehicle system 2 to be at fault rather than the nomadic device 3, may be implemented through one or more processors, such as a **processor 35**, here denoted CPU, together with computer program code for performing the functions and actions of the embodiments herein. Said program code may also be provided as a computer program product, for instance in the form of a data carrier carrying computer program code for performing the embodiments herein when being loaded into the nomadic device 3. One such carrier may be in the form of a CD ROM disc. It is however feasible with other data carriers such as a memory stick. The computer program code may furthermore be provided as pure program code on a server and downloaded to the nomadic device 3.

The nomadic device 3 may further comprise a **memory 36** comprising one or more memory units. The memory 36 may be arranged to be used to store e.g. information, and further to store data, configurations, schedulings, fault data and applications, to perform the methods herein when being executed in the nomadic device 3. Those skilled in the art will also appreciate that the status determining unit 32, the providing unit 34, the optional nomadic receiving unit 31 and/or the nomadic refining unit 33 described above, which will be described in more detail below in this description, may refer to a combination of analog and digital circuits, and/or one or more processors configured with software and/or firmware, e.g. stored in a memory such as the memory 36, that when executed by the one or more processors such as the processor 35 perform as will be described in more detail below. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

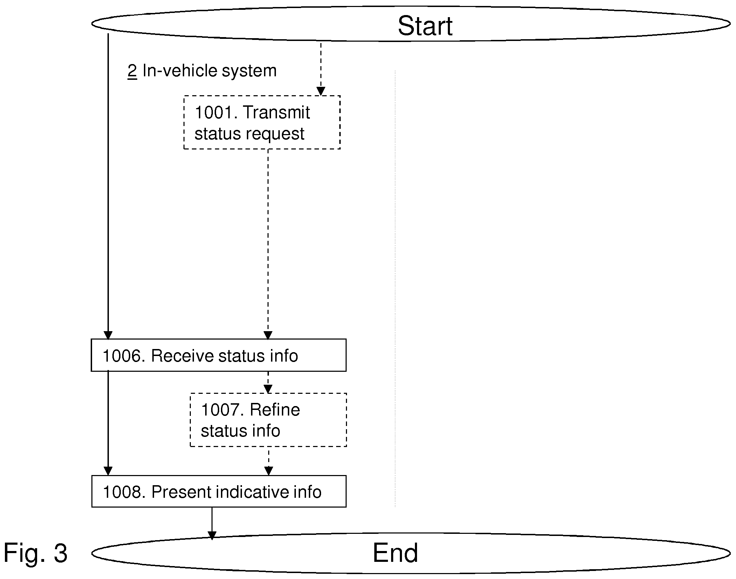

**Figure 3** is a flowchart depicting an exemplifying method performed by the in-vehicle system 2, which in-vehicle system 2 is paired with the nomadic device 3, according to embodiments of the disclosure. The method in the in-vehicle system 2 is for assisting a vehicle occupant utilizing functionality of the nomadic device 3 via the in-vehicle system 2, in avoiding incorrectly assuming the in-vehicle system 2 to be at fault rather than the nomadic device 3. The exemplifying method, which may be continuously repeated, comprises the following actions discussed with support from Figures 1 and 2.

### Action 1001

In optional Action 1001, the in-vehicle system 2 may transmit, by means of the request unit 21 comprised in the in-vehicle system 2, a status request to the nomadic device 3. The status request comprises a request for determining a current status associated with the nomadic device 3.

Optionally, the action 1001 of transmitting the status request may be initiated by a problem associated with the nomadic device 3 being detected.

Additionally or alternatively, the in-vehicle system 2 may provide a subscription of the in-vehicle system 2 to the nomadic device 3, which subscription defines conditions for the nomadic device 3 to determine status data 30 reflecting a current status associated with the nomadic device 3.

### Action 1006

In Action 1006, the in-vehicle system 2 receives, by means of the in-vehicle receiving unit 22 comprised in the in-vehicle system 2, status information 301 from the nomadic device 3. The status information 301 is based on status data 30, which status data 30 reflects a current status associated with the nomadic device 3.

The status data 30 may comprise a status indication, performance indication and/or an error indication of the nomadic device 3 itself, such as e.g. the indication of model, operating system version, device ID, SIM ID, SIM status, system uptime, temperature, CPU load, capacity demanding applications, and/or battery status.

Additionally or alternatively, the status data 30 may comprise a status indication, performance indication and/or an error indication of the radio communication connection between the radio communications network 4 and the nomadic device 3, such as e.g. the indication of type of radio communications network 4 and/or Quality of Service, for instance packet loss, jitter, streaming, signal strength, IP status, data connection and/or data activity.

Additionally or alternatively, the status data 30 may comprise a status indication, performance indication and/or an error indication of an application 37 running on the nomadic device 3.

Optionally, action 1006 of receiving the status information 301 may comprise receiving the status information 301 via the dedicated application 341, running on the nomadic device 3.

Additionally or alternatively, action 1006 of receiving the status information 301 may optionally comprise receiving the status information 301 via the standardized platform 342 enabling direct access from the in-vehicle system 2 to functionality, control and usage of the nomadic device 3.

### Action 1007

In optional Action 1007, the in-vehicle system 2 may refine, by means of the in-vehicle refining unit 23 comprised in the in-vehicle system 2, a raw content of the status information 301 to a refined content, subsequent the action 1006 of receiving the status information 301.

### Action 1008

In Action 1008, the in-vehicle system 2 presents, by means of a presenting unit 24 comprised in the in-vehicle system 2, indicative information 200 derived from the status information 301.

Optionally, action 1008 of presenting the indicative information 200 may comprise displaying the indicative information 200 on the display 20 of the in-vehicle system 2.

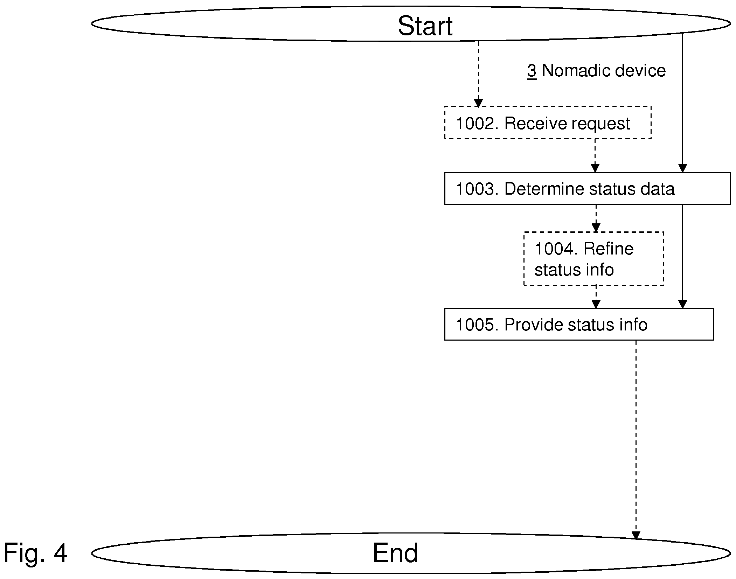

**Figure 4** is a flowchart depicting an exemplifying method performed by the nomadic device 3 paired with the in-vehicle system 2, according to embodiments of the disclosure. The method in the nomadic device 3 is for assisting a vehicle occupant utilizing functionality of the nomadic device 3 via the in-vehicle system 2, in avoiding incorrectly assuming the in-vehicle system 2 to be at fault rather than the nomadic device 3. The exemplifying method, which may be continuously repeated, comprises the following actions discussed with support from Figures 1 and 2.

### Action 1002

In optional Action 1002, the nomadic device 3 receives, by means of the nomadic receiving unit 31 comprised in the nomadic device 3, a status request from the in-vehicle system 2. The status request comprises a request for determining a current status associated with the nomadic device 3.

Additionally or alternatively, in order to initiate action 1003 of determining status data 30, which action will be described in more detail further on, a problem associated with the nomadic device 3 may have been detected.

Additionally or alternatively, in order to initiate action 1003 of determining status data 30, which action, as stated in the foregoing, will be described in more detail further on, conditions of a subscription of the in-vehicle system 2, which subscription defines conditions for the determining of action 1003, may have been determined to be fulfilled.

### Action 1003

In Action 1003, the nomadic device 3 determines, by means of the status determining unit 32 comprised in the nomadic device 3, status data 30 reflecting a current status associated with the nomadic device 3.

The status data 30 may comprise a status indication, performance indication and/or an error indication of the nomadic device 3 itself, such as e.g. the indication of model, operating system version, device ID, SIM ID, SIM status, system uptime, temperature, CPU load, capacity demanding applications, and/or battery status.

Additionally or alternatively, the status data 30 may comprise a status indication, performance indication and/or an error indication of the radio communication connection between the radio communications network 4 and the nomadic device 3, such as e.g. the indication of type of radio communications network 4 and/or Quality of Service, for instance packet loss, jitter, streaming, signal strength, IP status, data connection and/or data activity.

Additionally or alternatively, the status data 30 may comprise a status indication, performance indication and/or an error indication of an application 37 running on the nomadic device 3.

### Action 1004

In optional Action 1004, the nomadic device 3 refines, by means of the nomadic refining unit 33 comprised in the nomadic device 3, a raw content of the status information 301 to a refined content, prior to action 1005 of providing status information 301, which action will be described in more detail in the following.

### Action 1005

In Action 1005, the nomadic device 3 provides, by means of the providing unit 34 comprised in the nomadic device 3, status information 301 to the in-vehicle system 2, which status information 301 is based on the status data 30. Indicative information 200 derived from the status information 301 is adapted to be presented by the in-vehicle system 2.

Optionally, action 1005 of providing the status information 301 may comprise providing the status information 301 via a dedicated application 341 running on the nomadic device 3.

Additionally or alternatively, action 1005 of providing the status information 301 may optionally comprise providing the status information 301 via the standardized platform 342 enabling direct access from the in-vehicle system 2 to functionality, control and usage of the nomadic device 3.

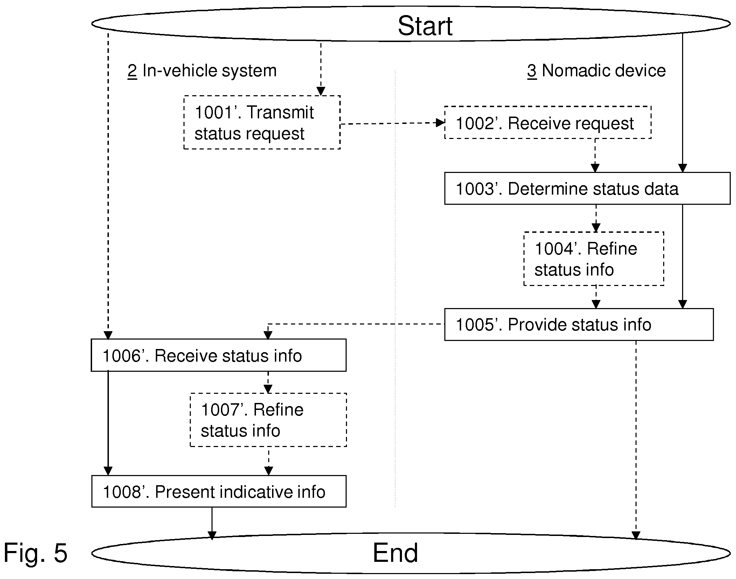

**Figure 5** is a flowchart depicting an exemplifying method performed by the nomadic device 3 and the in-vehicle system 2, which nomadic device 3 is paired with the in-vehicle system 2, according to embodiments of the disclosure. The actions of Figure 5 reflect the intertwined actions of the in-vehicle system 2 and the nomadic device 3, and thus correspond to actions 1001, 1006-1008 of the in-vehicle system 2 as described in Figure 3, and actions 1002-1005 of the nomadic device 3 as described in Figure 4.

The exemplifying method is for assisting a vehicle occupant utilizing functionality of the nomadic device 3 via the in-vehicle system 2, in avoiding incorrectly assuming the in-vehicle system 2 to be at fault rather than the nomadic device 3. The exemplifying method, which may be continuously repeated, comprises the following actions discussed with support from Figures 1 and 2.

### Action 1001' (in-vehicle system 2)

In optional Action 1001', the in-vehicle system 2 may transmit, by means of the request unit 21 comprised in the in-vehicle system 2, a status request to the nomadic device 3. The status request comprises a request for determining a current status associated with the nomadic device 3.

Optionally, the action 1001' of transmitting the status request may be initiated by a problem associated with the nomadic device 3 being detected.

Additionally or alternatively, the in-vehicle system 2 may provide a subscription of the in-vehicle system 2 to the nomadic device 3, which subscription defines conditions for the nomadic device 3 to determine status data 30 reflecting a current status associated with the nomadic device 3.

### Action 1002' (nomadic device 3)

In optional Action 1002', the nomadic device 3 receives, by means of the nomadic receiving unit 31 comprised in the nomadic device 3, a status request from the in-vehicle system 2. The status request comprises a request for determining a current status associated with the nomadic device 3.

Additionally or alternatively, in order to initiate action 1003' of determining status data 30, which action will be described in more detail further on, a problem associated with the nomadic device 3 may have been detected.

Additionally or alternatively, in order to initiate action 1003' of determining status data 30, which action, as previously indicated, will be described in more detail further on, conditions of a subscription of the in-vehicle system 2, which subscription defines conditions for the determining of action 1003', may have been determined to be fulfilled.

### Action 1003' (nomadic device 3)

In Action 1003', the nomadic device 3 determines, by means of the status determining unit 32 comprised in the nomadic device 3, status data 30 reflecting a current status associated with the nomadic device 3.

The status data 30 may comprise a status indication, performance indication and/or an error indication of the nomadic device 3 itself, such as e.g. the indication of model, operating system version, device ID, SIM ID, SIM status, system uptime, temperature, CPU load, capacity demanding applications, and/or battery status.

Additionally or alternatively, the status data 30 may comprise a status indication, performance indication and/or an error indication of the radio communication connection between the radio communications network 4 and the nomadic device 3, such as e.g. the indication type of radio communications network 4 and/or Quality of Service, for instance of packet loss, jitter, streaming, signal strength, IP status, data connection and/or data activity.

Additionally or alternatively, the status data 30 may comprise a status indication, performance indication and/or an error indication of an application 37 running on the nomadic device 3.

### Action 1004' (nomadic device 3)

In optional Action 1004', the nomadic device 3 refines, by means of the nomadic refining unit 33 comprised in the nomadic device 3, a raw content of the status information 301 to a refined content, prior to action 1005' of providing status information 301, which action will be described in the following.

### Action 1005' (nomadic device 3)

In Action 1005', the nomadic device 3 provides, by means of the providing unit 34 comprised in the nomadic device 3, status information 301 to the in-vehicle system 2, which status information 301 is based on the status data 30. Indicative information 200 derived from the status information 301 is adapted to be presented by the in-vehicle system 2.

Optionally, action 1005' of providing the status information 301 may comprise providing the status information 301 via a dedicated application 341 running on the nomadic device 3.

Additionally or alternatively, action 1005' of providing the status information 301 may optionally comprise providing the status information 301 via the standardized platform 342 enabling direct access from the in-vehicle system 2 to functionality, control and usage of the nomadic device 3.

### Action 1006' (in-vehicle system 2)

In Action 1006', the in-vehicle system 2 receives, by means of the in-vehicle receiving unit 22 comprised in the in-vehicle system 2, status information 301 from the nomadic device 3. The status information 301 is based on status data 30, which status data 30 reflects a current status associated with the nomadic device 3.

The status data 30 may comprise a status indication, performance indication and/or an error indication of the nomadic device 3 itself, such as e.g. the indication of model, operating system version, device ID, SIM ID, SIM status, system uptime, temperature, CPU load, capacity demanding applications, and/or battery status.

Additionally or alternatively, the status data 30 may comprise a status indication, performance indication and/or an error indication of the radio communication connection between the radio communications network 4 and the nomadic device 3, such as e.g. the indication of type of radio communications network 4 and/or Quality of Service, for instance packet loss, jitter, streaming, signal strength, IP status, data connection and/or data activity.

Additionally or alternatively, the status data 30 may comprise a status indication, performance indication and/or an error indication of an application 37 running on the nomadic device 3.

Optionally, action 1006 of receiving the status information 301 may comprise receiving the status information 301 via a dedicated application 37 running on the nomadic device 3.

Additionally or alternatively, action 1006' of receiving the status information 301 may optionally comprise receiving the status information 301 via the standardized platform 342 enabling direct access from the in-vehicle system 2 to functionality, control and usage of the nomadic device 3.

### Action 1007' (in-vehicle system 2)

In optional Action 1007', the in-vehicle system 2 may refine, by means of the in-vehicle refining unit 23 comprised in the in-vehicle system 2, a raw content of the status information 301 to a refined content, subsequent the action 1006' of receiving the status information 301.

### Action 1008' (in-vehicle system 2)

In Action 1008', the in-vehicle system 2 presents, by means of a presenting unit 24 comprised in the in-vehicle system 2, indicative information 200 derived from the status information 301.

Optionally, action 1008' of presenting the indicative information 200 may comprise displaying the indicative information 200 on the display 20 of the in-vehicle system 2.

Consequently, according to introduced concept as described in the foregoing, there is provided an approach according to which, by informing, or alerting, a vehicle occupant utilizing functionality of a nomadic device 3 via an in-vehicle system 2, of a current status associated with the nomadic device 3, the vehicle occupant is assisted in judging whether an experienced e.g. problem may be related to the nomadic device 3 rather than the in-vehicle system 2.

The person skilled in the art realizes that the present disclosure by no means is limited to the preferred embodiments described above. On the contrary, the invention is defined by the appended claims. It should furthermore be noted that the drawings not necessarily are to scale and the dimensions of certain features may have been exaggerated for the sake of clarity. Emphasis is instead placed upon illustrating the principle of the embodiments herein.

## Claims

1. A method performed by a nomadic device (3) paired with an in-vehicle system (2) of a vehicle (1), for assisting a vehicle occupant utilizing functionality of said nomadic device (3) via said in-vehicle system (2), in avoiding incorrectly assuming said in-vehicle system (2) to be at fault rather than said nomadic device (3), said method comprising:
*determining* (1003), by means of a status determining unit (32) comprised in said nomadic device (3), status data (30) reflecting a current status associated with said nomadic device (3), wherein said status data (30) comprises an error indication associated with:
said nomadic device (3) itself,
a radio communication connection between a radio communications network (4) and said nomadic device (3), and
an application (37) running on said nomadic device (3),
wherein said *determining* (1003) is initiated by a problem associated with the nomadic device (3) being detected and *receiving* (1002), by means of a nomadic receiving unit (31) comprised in said nomadic device (3), a status request from said in-vehicle system (2), wherein said status request comprises a request for determining a current status associated with said nomadic device (3); and
*providing* (1005), by means of a providing unit (34) comprised in said nomadic device (3), status information (301) to said in-vehicle system (2), which status information (301) is based on said status data (30), wherein indicative information (200) derived from said status information (301) is adapted to be presented by said in-vehicle system (2).

2. The method according to claim 1, wherein said status data (30) comprises a status indication, performance indication and/or an error indication associated with:
said nomadic device (3) itself, such as e.g. an indication of model, operating system version, device ID, SIM ID, SIM status, system uptime, temperature, CPU load, capacity demanding applications, and/or battery status; and/or
a radio communication connection between a radio communications network (4) and said nomadic device (3), such as e.g. an indication of type of radio communications network (4) and/or Quality of Service, for instance packet loss, jitter, streaming, signal strength, IP status, data connection and/or data activity; and
an application (37) running on said nomadic device (3).

3. The method according to claim 1 or 2, wherein said *providing* (1005) comprises providing said status information (301) via a dedicated application (341), running on said nomadic device (3), and/or providing said status information (301) via a standardized platform (342) enabling direct access from said in-vehicle system (2) to functionality, control and usage of said nomadic device (3).

4. The method according to any one of claims 1-3, further comprising:
*refining* (1004), by means of a nomadic refining unit (33) comprised in said nomadic device (3), a raw content of said status information (301) to a refined content, prior to said *providing* (1005) of the status information (301).

5. The method according to any one of claims 1-4, wherein said *determining* (1003) is initiated by conditions of a subscription of said in-vehicle system (2) being fulfilled, said subscription defining the conditions for said *determining* (1003).

6. A method performed by an in-vehicle system (2) of a vehicle (1), which in-vehicle system (2) is paired with a nomadic device (3), for assisting a vehicle occupant utilizing functionality of said nomadic device (3) via said in-vehicle system (2), in avoiding incorrectly assuming said in-vehicle system (2) to be at fault rather than said nomadic device (3), said method comprising:
*transmitting* (1001), by means of a request unit (21) comprised in said in-vehicle system (2), a status request to said nomadic device (3), wherein said status request comprises a request for determining a current status associated with said nomadic device (3), wherein said *transmitting* (1001) is initiated by a problem associated with the nomadic device (3) being detected;
*receiving* (1006), by means of an in-vehicle receiving unit (22) comprised in said in-vehicle system (2), status information (301) from said nomadic device (3), which status information (301) is based on status data (30), wherein said status data (30) reflects a current status associated with said nomadic device (3), said status data comprising an error indication of:
said nomadic device (3) itself,
a radio communication connection between a radio communications network (4) and said nomadic device (3), and
an application (37) running on said nomadic device (3); and
*presenting* (1008), by means of a presenting unit (24) comprised in said in-vehicle system (2), indicative information (200) derived from said status information (301).

7. The method according to claim 6, wherein said status data (30) comprises a status indication, performance indication and/or an error indication of:
said nomadic device (3) itself, such as e.g. an indication of model, operating system version, device ID, SIM ID, SIM status, system uptime, temperature, CPU load, capacity demanding applications, and/or battery status; and/or
a radio communication connection between a radio communications network (4) and said nomadic device (3), such as e.g. an indication of type of radio communications network (4) and/or Quality of Service, for instance packet loss, jitter, streaming, signal strength, IP status, data connection and/or data activity; and
an application (37) running on said nomadic device (3)].

8. The method according to claim 6 or 7, wherein said *receiving* (1006) comprises receiving said status information (301) via a dedicated application (341), running on said nomadic device (3), and/or receiving said status information (301) via a standardized platform (342) enabling direct access from said in-vehicle system (2) to functionality, control and usage of said nomadic device (3).

9. The method according to any one of claims 6-8, further comprising:
*refining* (1007), by means of an in-vehicle refining unit (23) comprised in said in-vehicle system (2), a raw content of said status information (301) to a refined content, subsequent said *receiving* (1006) the status information (301).

10. The method according to any one of claims 6-9, further comprising:
providing a subscription of said in-vehicle system (2) to said nomadic device (3), said subscription defining conditions for the nomadic device (3) to determine said status data (30) reflecting a current status associated with said nomadic device (3).

11. The method according to any one of claims 6-10, wherein said *presenting* (1008) the indicative information (200) comprises displaying the indicative information (200) on a display (20) of said in-vehicle system (2).

12. A **nomadic device** (3) adapted to be paired with an in-vehicle system (2) of a vehicle (1), for assisting a vehicle occupant utilizing functionality of said nomadic device (3) via said in-vehicle system (2), in avoiding incorrectly assuming said in-vehicle system (2) to be at fault rather than said nomadic device (3), said nomadic device (3) comprising:
a **nomadic receiving unit** (31) adapted for *receiving* (1002) a status request from said in-vehicle system (2) following a problem associated with the nomadic device being detected, wherein said status request comprises a request for determining a current status associated with said nomadic device (3);
a **status determining unit** (32) adapted for *determining* (1103) status data (30) reflecting a current status associated with said nomadic device (3), wherein said status data (30) comprises an error indication associated with:
said nomadic device (3) itself,
a radio communication connection between a radio communications network (4) and said nomadic device (3), and
an application (37) running on said nomadic device (3); and
a **providing unit** (34) adapted for *providing* (1005) status information (301) to said in-vehicle system (2), which status information (301) is based on said status data (30), wherein indicative information (200) derived from said status information (301) is adapted to be presented by said in-vehicle system (2).

13. An **in-vehicle system** (2) of a vehicle (3), which in-vehicle system (2) is adapted to be paired with a nomadic device (3), for assisting a vehicle occupant utilizing functionality of said nomadic device (3) via said in-vehicle system (2), in avoiding incorrectly assuming said in-vehicle system (2) to be at fault rather than said nomadic device (3), said in-vehicle system (2) comprising:
a **request unit** (21) adapted for *transmitting* (1001) a status request to said nomadic device (3), wherein said status request comprises a request for determining a current status associated with said nomadic device (3), wherein said *transmitting* (1001) is initiated by a problem associated with the nomadic device (3) being detected;
an **in-vehicle receiving unit** (22) adapted for *receiving* (1006) status information (301) from said nomadic device (3), which status information (301) is based on status data (30), wherein said status data (30) reflects a current status associated with said nomadic device (3), said status data comprising an error indication of:
said nomadic device (3) itself,
a radio communication connection between a radio communications network (4) and said nomadic device (3), and
an application (37) running on said nomadic device (3); and
a **presenting unit** (24) adapted for *presenting* (1008) indicative information (200) derived from said status information (301).

14. A **vehicle** (1) comprising an in-vehicle system (2) according to claim 13.

## Patentansprüche

1. Verfahren, durchgeführt von einer mit einem fahrzeuginternen System (2) eines Fahrzeugs (1) gekoppelten nomadischen Einrichtung (3), zur Unterstützung eines Fahrzeuginsassen bei der Verwendung von Funktionalität der nomadischen Einrichtung (3) über das fahrzeuginterne System (2), um die inkorrekte Annahme zu vermeiden, dass ein Fehler bei dem fahrzeuginternen System (2) statt bei der nomadischen Einrichtung (3) vorliegt, wobei das Verfahren umfasst:
*Ermitteln* (1003), mittels einer in der nomadischen Einrichtung (3) umfassten Statusermittlungseinheit (32), von Statusdaten (30), die einen mit der nomadischen Einrichtung (3) assoziierten aktuellen Status wiedergeben, wobei die Statusdaten (30) eine Fehlerangabe umfassen, die assoziiert ist mit
der nomadischen Einrichtung (3) selbst,
einer Funkkommunikationsverbindung zwischen einem Funkkommunikationsnetzwerk (4) und der nomadischen Einrichtung (3), und
einer Anwendung (37), die auf der nomadischen Einrichtung (3) ausgeführt wird,
wobei das *Ermitteln* (1003) dadurch initiiert wird, dass ein der nomadischen Einrichtung (3) zugeordnetes Problem detektiert wird; und *Empfangen* (1002), mittels einer in der nomadischen Einrichtung (3) umfassten nomadischen Empfangseinheit (31), einer Statusanforderung von dem fahrzeuginternen System (2), wobei die Statusanforderung eine Anforderung des Ermittelns eines der nomadischen Einrichtung (3) zugeordneten aktuellen Status umfasst; und
*Bereitstellen* (1005), mittels einer in der nomadischen Einrichtung (3) umfassten Bereitstellungseinheit (34), von Statusinformation (301) für das fahrzeuginterne System (2), wobei die Statusinformation (301) auf den Statusdaten (30) basiert, wobei aus der Statusinformation (301) abgeleitete indikative Information (200) eingerichtet ist, um durch das fahrzeuginterne System (2) präsentiert zu werden.

2. Verfahren nach Anspruch 1, wobei die Statusdaten (30) eine Statusangabe, eine Performanzangabe und/oder eine Fehlerangabe umfassen, assoziiert mit
der nomadischen Einrichtung (3) selbst, wie z. B. eine Angabe des Modells, der Version des Betriebssystems, der Geräte-ID, der SIM-ID, des SIM-Status, der Systemverfügbarkeit, der Temperatur, der CPU-Last, von Kapazität beanspruchenden Anwendungen, und/oder des Batteriestatus; und/oder
einer Funkkommunikationsverbindung zwischen einem Funkkommunikationsnetzwerk (4) und der nomadischen Einrichtung (3), wie z. B. eine Angabe des Typs von Funkkommunikationsnetzwerk (4) und/oder der Dienstgüte, beispielsweise von Paketverlust, Jitter, Streaming, Signalstärke, IP-Status, Datenverbindung und/oder Datenaktivität; und
einer auf der nomadischen Einrichtung (3) ausgeführten Anwendung (37).

3. Verfahren nach Anspruch 1 oder 2, wobei das *Bereitstellen* (1005) das Bereitstellen der Statusinformation (301) über eine auf der nomadischen Einrichtung (3) ausgeführte dedizierte Anwendung (341) umfasst und/oder das Bereitstellen der Statusinformation (301) über eine standardisierte Plattform (342), die direkten Zugriff von dem fahrzeuginternen System (2) auf Funktionalität, Steuerung und Verwendung der nomadischen Einrichtung (3) ermöglicht.

4. Verfahren nach einem der Ansprüche 1-3, ferner umfassend:
*Verfeinern* (1004), mittels einer in der nomadischen Einrichtung (3) umfassten nomadischen Verfeinerungseinheit (33), eines Rohinhalts der Statusinformation (301) zu einem verfeinerten Inhalt vor dem *Bereitstellen* (1005) der Statusinformation (301).

5. Verfahren nach einem der Ansprüche 1-4, wobei das *Ermitteln* (1003) durch erfüllte Bezugsbedingungen des fahrzeuginternen Systems (2) initiiert wird, wobei das Abonnement die Bedingungen für das *Ermitteln* (1003) definiert.

6. Verfahren, durchgeführt von einem fahrzeuginternen System (2) eines Fahrzeugs (1), wobei das fahrzeuginterne System (2) mit einer nomadischen Einrichtung (3) gekoppelt ist, zur Unterstützung eines Fahrzeuginsassen bei der Verwendung von Funktionalität der nomadischen Einrichtung (3) über das fahrzeuginterne System (2), um die inkorrekte Annahme zu vermeiden, dass ein Fehler bei dem fahrzeuginternen System (2) statt bei der nomadischen Einrichtung (3) vorliegt, wobei das Verfahren umfasst:
*Senden* (1001), mittels einer in dem fahrzeuginternen System (2) umfassten Anforderungseinheit (21), einer Statusanforderung zu der nomadischen Einrichtung (3), wobei die Statusanforderung eine Anforderung zum Ermitteln eines der nomadischen Einrichtung (3) zugeordneten aktuellen Status umfasst, wobei das *Senden* (1001) durch die Detektion eines mit der nomadischen Einrichtung (3) assoziierten Problems initiiert wird;
*Empfangen* (1006), mittels einer in dem fahrzeuginternen System (2) umfassten fahrzeuginternen Empfangseinheit (22), von Statusinformation (301) von der nomadischen Einrichtung (3), wobei die Statusinformation (301) auf Statusdaten (30) basiert, wobei die Statusdaten (30) einen mit der nomadischen Einrichtung (3) assoziierten aktuellen Status wiedergeben, wobei die Statusdaten eine Fehlerangabe umfassen, bezogen auf
die nomadische Einrichtung (3) selbst;
eine Funkkommunikationsverbindung zwischen einem Funkkommunikationsnetzwerk (4) und der nomadischen Einrichtung (3), und
eine Anwendung (37), die auf der nomadischen Einrichtung (3) ausgeführt wird; und
*Präsentieren* (1008), mittels einer in dem fahrzeuginternen System (2) umfassten Präsentationseinheit (24), von aus der Statusinformation (301) abgeleiteter indikativer Information (200).

7. Verfahren nach Anspruch 6, wobei die Statusdaten (30) eine Statusangabe, eine Performanzangabe und/oder eine Fehlerangabe umfassen, bezogen auf
die nomadische Einrichtung (3) selbst, wie z. B. eine Angabe des Modells, der Version des Betriebssystems, der Geräte-ID, der SIM-ID, des SIM-Status, der Systemverfügbarkeit, der Temperatur, der CPU-Last, von Kapazität beanspruchenden Anwendungen, und/oder des Batteriestatus; und/oder
eine Funkkommunikationsverbindung zwischen einem Funkkommunikationsnetzwerk (4) und der nomadischen Einrichtung (3), wie z. B. eine Angabe des Typs von Funkkommunikationsnetzwerk (4) und/oder der Dienstgüte, beispielsweise von Paketverlust, Jitter, Streaming, Signalstärke, IP-Status, Datenverbindung und/oder Datenaktivität; und
eine auf der nomadischen Einrichtung (3) ausgeführte Anwendung (37).

8. Verfahren nach Anspruch 6 oder 7, wobei das *Empfangen* (1006) das Empfangen der Statusinformation (301) über eine auf der nomadischen Einrichtung (3) ausgeführte dedizierte Anwendung (341) umfasst und/oder das Empfangen der Statusinformation (301) über eine standardisierte Plattform (342), die direkten Zugriff von dem fahrzeuginternen System (2) auf Funktionalität, Steuerung und Verwendung der nomadischen Einrichtung (3) ermöglicht.

9. Verfahren nach einem der Ansprüche 6-8, ferner umfassend:
*Verfeinern* (1007), mittels einer in dem fahrzeuginternen System (2) umfassten fahrzeuginternen Verfeinerungseinheit (23), eines Rohinhalts der Statusinformation (301) zu einem verfeinerten Inhalt nach dem *Empfangen* (1006) der Statusinformation (301).

10. Verfahren nach einem der Ansprüche 6-9, ferner umfassend:
Bereitstellen eines Abonnements des fahrzeuginternen Systems (2) für die nomadische Einrichtung (3), wobei das Abonnement Bedingungen für die nomadische Einrichtung (3) definiert, um die Statusdaten (30) zu ermitteln, die einen mit der nomadischen Einrichtung (3) assoziierten aktuellen Status wiedergeben.

11. Verfahren nach einem der Ansprüche 6-10, wobei das *Präsentieren* (1008) der indikativen Information (200) das Anzeigen der indikativen Information (200) auf einer Anzeige (20) des fahrzeuginternen Systems (2) umfasst.

12. **Nomadische Einrichtung** (3), eingerichtet zur Kopplung mit einem fahrzeuginternen System (2) eines Fahrzeugs (1) zur Unterstützung eines Fahrzeuginsassen bei der Verwendung von Funktionalität der nomadischen Einrichtung (3) über das fahrzeuginterne System (2), um die inkorrekte Annahme zu vermeiden, dass ein Fehler bei dem fahrzeuginternen System (2) statt bei der nomadischen Einrichtung (3) vorliegt, wobei die nomadische Einrichtung (3) umfasst:
eine **nomadische Empfangseinheit** (31), eingerichtet zum *Empfangen* (1002) einer Statusanforderung von dem fahrzeuginternen System (2) im Anschluss an die Detektion eines mit der nomadischen Einrichtung assoziierten Problems, wobei die Statusanforderung eine Anforderung zum Ermitteln eines mit der nomadischen Einrichtung (3) assoziierten aktuellen Status umfasst;
eine **Statusermittlungseinheit** (32), eingerichtet zum *Ermitteln* (1103) von Statusdaten (30), die einen mit der nomadischen Einrichtung (3) assoziierten aktuellen Status wiedergeben, wobei die Statusdaten (30) eine Fehlerangabe umfassen, die assoziiert ist mit
der nomadischen Einrichtung (3) selbst;
einer Funkkommunikationsverbindung zwischen einem Funkkommunikationsnetzwerk (4) und der nomadischen Einrichtung (3), und
einer Anwendung (37), die auf der nomadischen Einrichtung (3) ausgeführt wird; und
eine **Bereitstellungseinheit** (34), eingerichtet zum *Bereitstellen* (1005) von Statusinformation (301) für das fahrzeuginterne System (2), wobei die Statusinformation (301) auf den Statusdaten (30) basiert, wobei aus der Statusinformation (301) abgeleitete indikative Information (200) eingerichtet ist, um durch das fahrzeuginterne System (2) präsentiert zu werden.

13. **Fahrzeuginternes System** (2) eines Fahrzeugs (3), wobei das fahrzeuginterne System (2) eingerichtet ist für die Kopplung mit einer nomadischen Einrichtung (3) zur Unterstützung eines Fahrzeuginsassen bei der Verwendung von Funktionalität der nomadischen Einrichtung (3) über das fahrzeuginterne System (2), um die inkorrekte Annahme zu vermeiden, dass ein Fehler bei dem fahrzeuginternen System (2) statt bei der nomadischen Einrichtung (3) vorliegt, wobei das fahrzeuginterne System (2) umfasst:
eine **Anforderungseinheit** (21), eingerichtet zum *Senden* (1001) einer Statusanforderung zu der nomadischen Einrichtung (3), wobei die Statusanforderung eine Anforderung zum Ermitteln eines der nomadischen Einrichtung (3) zugeordneten aktuellen Status umfasst, wobei das *Senden* (1001) durch die Detektion eines mit der nomadischen Einrichtung (3) assoziierten Problems initiiert wird;
eine **fahrzeuginterne Empfangseinheit** (22), eingerichtet zum *Empfangen* (1006) von Statusinformation (301) von der nomadischen Einrichtung (3), wobei die Statusinformation (301) auf Statusdaten (30) basiert, wobei die Statusdaten (30) einen mit der nomadischen Einrichtung (3) assoziierten aktuellen Status wiedergeben, wobei die Statusdaten eine Fehlerangabe umfassen, bezogen auf
die nomadische Einrichtung (3) selbst;
eine Funkkommunikationsverbindung zwischen einem Funkkommunikationsnetzwerk (4) und der nomadischen Einrichtung (3), und
eine Anwendung (37), die auf der nomadischen Einrichtung (3) ausgeführt wird; und
eine **Präsentationseinheit** (24), eingerichtet zum *Präsentieren* (1008) von aus der Statusinformation (301) abgeleiteter indikativer Information (200).

14. **Fahrzeug** (1), umfassend ein fahrzeuginternes System (2) nach Anspruch 13.

## Revendications

1. Procédé, réalisé par un dispositif nomade (3) jumelé avec un système embarqué (2) d'un véhicule (1), destiné à aider un occupant de véhicule, exploitant la fonctionnalité dudit dispositif nomade (3) par l'entremise dudit système embarqué (2), à éviter de présumer à tort que ledit système embarqué (2) est fautif plutôt que ledit dispositif nomade (3), ledit procédé comprenant :
la *détermination* (1003), au moyen d'une unité de détermination d'état (32) comprise dans ledit dispositif nomade (3), de données d'état (30) reflétant un état actuel associé audit dispositif nomade (3), lesdites données d'état (30) comprenant une indication d'erreur associée :
audit dispositif nomade (3) lui-même,
à une connexion de radiocommunication entre un réseau de radiocommunications (4) et ledit dispositif nomade (3), et
à une application (37) tournant sur ledit dispositif nomade (3),
ladite *détermination* (1003) étant déclenchée par un problème associé à la détection du dispositif nomade (3) et la *réception* (1002), au moyen d'une unité de réception nomade (31) comprise dans ledit dispositif nomade (3), d'une requête d'état émanant dudit système embarqué (2), ladite requête d'état comprenant une requête de détermination d'un état actuel associé audit dispositif nomade (3) ; et
la *fourniture* (1005), au moyen d'une unité de fourniture (34) comprise dans ledit dispositif nomade (3), d'informations d'état (301) audit système embarqué (2), lesquelles informations d'état (301) sont basées sur lesdites données d'état (30), des informations indicatrices (200) dérivées desdites informations d'état (301) étant adaptées à être présentées par ledit système embarqué (2).

2. Procédé selon la revendication 1, dans lequel lesdites données d'état (30) comprennent une indication d'état, une indication de performance et/ou une indication d'erreur associées :
audit dispositif nomade (3) lui-même, comme, par ex., une indication de modèle, de version de système d'exploitation, d'identifiant de dispositif, d'identifiant de SIM, d'état de SIM, de temps de disponibilité système, de température, de charge de CPU, d'applications gourmandes en capacité et/ou d'état de batterie ; et/ou
à une connexion de radiocommunication entre un réseau de radiocommunications (4) et ledit dispositif nomade (3), comme, par ex., une indication de type de réseau de radiocommunications (4) et/ou de Qualité de Service, par exemple de perte de paquets, de gigue, de diffusion en flux continu, d'intensité de signal, d'état IP, de connexion de données et/ou d'activité de données ; et
à une application (37) tournant sur ledit dispositif nomade (3).

3. Procédé selon la revendication 1 ou 2, dans lequel ladite *fourniture* (1005) comprend la fourniture desdites informations d'état (301) par l'entremise d'une application dédiée (341), tournant sur ledit dispositif nomade (3), et/ou la fourniture desdites informations d'état (301) par l'entremise d'une plateforme normalisée (342) permettant un accès direct à partir dudit système embarqué (2) à la fonctionnalité, la commande et l'utilisation dudit dispositif nomade (3).

4. Procédé selon l'une quelconque des revendications 1 à 3, comprenant en outre :
*l'affinement* (1004), au moyen d'une unité d'affinement nomade (33) comprise dans ledit dispositif nomade (3), d'un contenu brut desdites informations d'état (301) pour obtenir un contenu affiné, préalablement à ladite *fourniture* (1005) des informations d'état (301).

5. Procédé selon l'une quelconque des revendications 1 à 4, dans lequel ladite *détermination* (1003) est déclenchée par la satisfaction de conditions d'un abonnement dudit système embarqué (2), ledit abonnement définissant les conditions pour ladite *détermination* (1003).

6. Procédé, réalisé par un système embarqué (2) d'un véhicule (1), lequel système embarqué (2) est jumelé avec un dispositif nomade (3), destiné à aider un occupant de véhicule, exploitant la fonctionnalité dudit dispositif nomade (3) par l'entremise dudit système embarqué (2), à éviter de présumer à tort que ledit système embarqué (2) est fautif plutôt que ledit dispositif nomade (3), ledit procédé comprenant :
la *transmission* (1001), au moyen d'une unité de requête (21) comprise dans ledit système embarqué (2), d'une requête d'état audit dispositif nomade (3), ladite requête d'état comprenant une requête de détermination d'un état actuel associé audit dispositif nomade (3), ladite *transmission* (1001) étant déclenchée par un problème associé à la détection du dispositif nomade (3) ;
la *réception* (1006), au moyen d'une unité de réception embarquée (22) comprise dans ledit système embarqué (2), d'informations d'état (301) émanant dudit dispositif nomade (3), lesquelles informations d'état (301) sont basées sur des données d'état (30), lesdites données d'état (30) reflétant un état actuel associé audit dispositif nomade (3), lesdites données d'état comprenant une indication d'erreur :
dudit dispositif nomade (3) lui-même,
d'une connexion de radiocommunication entre un réseau de radiocommunications (4) et ledit dispositif nomade (3), et
d'une application (37) tournant sur ledit dispositif nomade (3) ; et
la *présentation* (1008), au moyen d'une unité de présentation (24) comprise dans ledit système embarqué (2), d'informations indicatrices (200) dérivées desdites informations d'état (301).

7. Procédé selon la revendication 6, dans lequel lesdites données d'état (30) comprennent une indication d'état, une indication de performance et/ou une indication d'erreur :
dudit dispositif nomade (3) lui-même, comme, par ex., une indication de modèle, de version de système d'exploitation, d'identifiant de dispositif, d'identifiant de SIM, d'état de SIM, de temps de disponibilité système, de température, de charge de CPU, d'applications gourmandes en capacité et/ou d'état de batterie ; et/ou
d'une connexion de radiocommunication entre un réseau de radiocommunications (4) et ledit dispositif nomade (3), comme, par ex., une indication de type de réseau de radiocommunications (4) et/ou de Qualité de Service, par exemple de perte de paquets, de gigue, de diffusion en flux continu, d'intensité de signal, d'état IP, de connexion de données et/ou d'activité de données ; et
d'une application (37) tournant sur ledit dispositif nomade (3).

8. Procédé selon la revendication 6 ou 7, dans lequel ladite *réception* (1006) comprend la réception desdites informations d'état (301) par l'entremise d'une application dédiée (341), tournant sur ledit dispositif nomade (3), et/ou la réception desdites informations d'état (301) par l'entremise d'une plateforme normalisée (342) permettant un accès direct à partir dudit système embarqué (2) à la fonctionnalité, la commande et l'utilisation dudit dispositif nomade (3).

9. Procédé selon l'une quelconque des revendications 6 à 8, comprenant en outre :
*l'affinement* (1007), au moyen d'une unité d'affinement embarquée (23) comprise dans ledit système embarqué (2), d'un contenu brut desdites informations d'état (301) pour obtenir un contenu affiné, suite à ladite *réception* (1006) des informations d'état (301).

10. Procédé selon l'une quelconque des revendications 6 à 9, comprenant en outre :
la fourniture d'un abonnement dudit système embarqué (2) audit dispositif nomade (3), ledit abonnement définissant des conditions pour le dispositif nomade (3) dans le but de déterminer lesdites données d'état (30) reflétant un état actuel associé audit dispositif nomade (3).

11. Procédé selon l'une quelconque des revendications 6 à 10, dans lequel ladite *présentation* (1008) des informations indicatrices (200) comprend l'affichage des informations indicatrices (200) sur un affichage (20) dudit système embarqué (2).

12. **Dispositif nomade** (3) adapté à être jumelé avec un système embarqué (2) d'un véhicule (1), destiné à aider un occupant de véhicule, exploitant la fonctionnalité dudit dispositif nomade (3) par l'entremise dudit système embarqué (2), à éviter de présumer à tort que ledit système embarqué (2) est fautif plutôt que ledit dispositif nomade (3), ledit dispositif nomade (3) comprenant :
une **unité de réception nomade** (31) adaptée à *recevoir* (1002) une requête d'état émanant dudit système embarqué (2) suite à un problème associé à la détection du dispositif nomade, ladite requête d'état comprenant une requête de détermination d'un état actuel associé audit dispositif nomade (3) ;
une **unité de détermination d'état** (32) adaptée à *déterminer* (1103) des données d'état (30) reflétant un état actuel associé audit dispositif nomade (3), lesdites données d'état (30) comprenant une indication d'erreur associée :
audit dispositif nomade (3) lui-même,
à une connexion de radiocommunication entre un réseau de radiocommunications (4) et ledit dispositif nomade (3), et
à une application (37) tournant sur ledit dispositif nomade (3) ; et
une **unité de fourniture** (34) adaptée à *fournir* (1005) des informations d'état (301) audit système embarqué (2), lesquelles informations d'état (301) sont basées sur lesdites données d'état (30), des informations indicatrices (200) dérivées desdites informations d'état (301) étant adaptées à être présentées par ledit système embarqué (2).

13. **Système embarqué** (2) d'un véhicule (3), lequel système embarqué (2) est adapté à être jumelé avec un dispositif nomade (3), destiné à aider un occupant de véhicule, exploitant la fonctionnalité dudit dispositif nomade (3) par l'entremise dudit système embarqué (2), à éviter de présumer à tort que ledit système embarqué (2) est fautif plutôt que ledit dispositif nomade (3), ledit système embarqué (2) comprenant :
une **unité de requête** (21) adaptée à *transmettre* (1001) une requête d'état audit dispositif nomade (3), ladite requête d'état comprenant une requête de détermination d'un état actuel associé audit dispositif nomade (3), ladite *transmission* (1001) étant déclenchée par un problème associé à la détection du dispositif nomade (3) ;
une **unité de réception embarquée** (22) adaptée à *recevoir* (1006) des informations d'état (301) émanant dudit dispositif nomade (3), lesquelles informations d'état (301) sont basées sur des données d'état (30), lesdites données d'état (30) reflétant un état actuel associé audit dispositif nomade (3), lesdites données d'état comprenant une indication d'erreur :
dudit dispositif nomade (3) lui-même,
d'une connexion de radiocommunication entre un réseau de radiocommunications (4) et ledit dispositif nomade (3), et
d'une application (37) tournant sur ledit dispositif nomade (3) ; et
une **unité de présentation** (24) adaptée à *présenter* (1008) des informations indicatrices (200) dérivées desdites informations d'état (301).

14. **Véhicule** (1) comprenant un système embarqué (2) selon la revendication 13.
